# FASCICULE DE BREVET EUROPEEN

(11) **EP 2 295 287 B1**
(45) Date de publication et mention de la délivrance du brevet: **01.08.2012**
(21) Numéro de dépôt: 09170240.7
(22) Date de dépôt: 14.09.2009
(51) Int. Cl.: B60N 2/28

(54) **Base de fixation pour un siège automobile pour enfant**
Befestigungsbasis für einen Autokindersitz
Fixing base for a child car seat

(43) Date de publication de la demande: 16.03.2011
(73) Titulaire: BÉBÉCAR - Utilidades para Criança, S.A., 4509-903 Caldas de S. Jorge (PT)
(72) Inventeur: Santos, Emanuel, 4505-689 Caldas De S. Jorge (PT); Ferreira, Valdemar, 4520-615 S. João de Ver (PT)
(74) Mandataire: Besnard, Christophe Laurent

(56) Documents cités:
- DE-A1- 19 744 978
- FR-A1- 2 854 597
- US-B1- 6 773 065

## Description

La présente invention a pour objet une base de fixation pour un siège automobile pour enfant (appelée ci-après "siège auto" par souci de concision).

En particulier, la base de fixation selon l'invention peut être une base dite « Isofix », munie d'un système d'ancrage sur le véhicule, conforme à la norme ISO 13216.

La base de fixation selon l'invention est adaptée à toutes sortes de sièges automobiles pour enfant, notamment des sièges classés dans les groupes 0, 0+ (sièges prévus pour être positionnés dos à la route), 1 (sièges prévus pour être positionnés face à la route) et 0/1 (sièges prévus pour être positionnés dos ou face à la route).

Les enfants en bas âge n'ont pas une morphologie adaptée aux systèmes de sécurité classiques prévus dans les véhicules automobiles (ceintures de sécurité, airbags, appuis-tête, etc.). Il est donc obligatoire de les faire voyager dans des sièges auto adaptés à leur taille et à leur corpulence.

L'utilisation de ces sièges auto reste cependant compliquée, notamment en raison de leur manque de maniabilité.

Avec les dispositifs actuels, l'utilisateur doit généralement faire pivoter l'enfant dans ses bras avant de l'asseoir dans le siège auto. La plupart du temps, l'utilisateur doit se baisser, se courber, voire pénétrer lui-même à l'intérieur du véhicule pour installer correctement l'enfant dans son siège.

Les problèmes rencontrés sont similaires lorsque l'utilisateur installe l'enfant dans son siège auto hors du véhicule. Les poids additionnés du siège et de l'enfant imposent généralement de porter le siège à deux mains, ce qui rend son introduction à l'intérieur du véhicule encore plus délicate.

Dans le cas de sièges auto destinés à coopérer avec une base fixée sur le siège passager, un autre inconvénient apparaît lorsque le siège auto et sa base doivent être utilisés dans plusieurs véhicules différents. Si la profondeur des sièges varie, la longueur de la base peut ne plus être adaptée. Dans ce cas, certains dispositifs de fixation, comme par exemple les pieds d'appui antirotation Isofix, ne peuvent pas être utilisés ou ne peuvent être utilisés que difficilement, de sorte que la sécurité de l'enfant n'est plus optimale.

Les sièges auto actuels posent encore un autre problème, lié à l'accessibilité permanente de certains boutons ou poignées d'actionnement, notamment des boutons ou poignées qui permettent de déverrouiller le siège de sa base. Les parents qui transportent plusieurs enfants sur la banquette arrière de leur véhicule peuvent craindre qu'en jouant avec ces moyens de déblocage, un enfant détache le siège auto d'un autre enfant.

L'état de la technique le plus proche est illustré par le document DE 197 44 978 A1.

La présente invention a pour objectif de faciliter l'utilisation des sièges auto et d'augmenter la sécurité et le confort de l'enfant.

Selon un premier aspect, l'invention propose une base de fixation pour siège auto permettant de faciliter considérablement l'installation de l'enfant dans son siège.

Selon un autre aspect, l'invention propose une base de fixation capable de s'adapter à des sièges passagers de profondeurs différentes.

Selon encore un autre aspect, l'invention permet d'améliorer la sécurité de l'enfant, en restreignant l'accessibilité à certains moyens d'actionnement du siège auto au cours du trajet du véhicule.

La base de fixation, décrite dans le document DE 19744978, comprend :
- un carter principal muni de moyens de guidage en translation,
- une plateforme coulissante apte à se translater par rapport audit carter principal dans un plan de coulissement, suivant une direction longitudinale, entre une première position et une deuxième position, en coopérant avec les dits moyens de guidage en translation,
- un support pivotant monté libre en rotation sur ladite plateforme coulissante autour d'un axe orthogonal au plan de coulissement de ladite plateforme,
- des moyens de fixation du siège automobile pour enfant, solidaires en rotation dudit support pivotant.
   La présente invention propose d'introduire une bielle dont une première extrémité est reliée au carter principal et une seconde extrémité est reliée au support pivotant, configurée de sorte que le mouvement de translation de la plateforme coulissante entraîne la rotation du support pivotant.

La base de fixation est généralement fixée sur l'assise d'un siège du véhicule de telle sorte que sa direction longitudinale correspond à la direction principale avant-arrière du véhicule.

Pour toute la suite de la description, lorsque la plateforme se trouve dans sa première position, le siège auto est dans une position réglementaire, adaptée au cas où le véhicule est en mouvement. Par extension, on parlera également de la première position du siège auto. Dans sa position réglementaire (première position), le siège est placé de sorte que l'enfant soit placé dos ou face à la route, et généralement de sorte qu'il soit le plus près possible du dossier du siège passager.

A contrario, lorsque la plateforme se trouve dans sa deuxième position, le siège se trouve dans une position non réglementaire, uniquement adaptée au cas où le véhicule est à l'arrêt. Il est généralement dirigé vers une portière du véhicule. Par extension, on parlera également de la deuxième position du siège auto.

Lorsque la plateforme coulissante se translate par rapport au carter principal depuis sa première position jusqu'à sa deuxième position, le siège se déplace également dans la direction longitudinale du véhicule en s'éloignant du dossier du siège passager. Dans le même temps, du fait de la rotation du support pivotant, le siège auto pivote jusqu'à atteindre une position dans laquelle il est dirigé vers une portière adjacente du véhicule. Puisque le siège auto s'éloigne du dossier du siège passager, le dossier ne gêne pas le pivotement du siège. Le siège auto peut donc, dans sa deuxième position, être orienté de manière optimale pour que l'utilisateur puisse très facilement installer son enfant dans le siège auto ou l'en retirer. De préférence, le siège auto pourra être orienté dans une direction transversale du véhicule, directement face à la portière. Par ailleurs, puisque le siège est éloigné du dossier du siège passager, l'utilisateur n'est pas gêné par les ceintures de sécurité ou par les rebords de carrosserie entourant latéralement la portière.

Selon un mode de réalisation, la base de fixation comprend en outre des moyens de blocage en translation de la plateforme coulissante par rapport au carter principal lorsque celle-ci se trouve dans sa première position, et des moyens de déblocage permettant de libérer le mouvement de translation de ladite plateforme.

Selon un mode de réalisation, la plateforme coulissante comporte au moins une face latérale de plateforme s'étendant dans la direction longitudinale et le carter principal comporte au moins une face latérale de carter s'étendant dans la direction longitudinale et opposée à ladite face latérale de plateforme. La plateforme coulissante ou le carter porte au moins un téton faisant saillie par rapport à sa face latérale, ledit téton pouvant passer d'une position déployée dans laquelle il coopère avec un orifice formé dans la face latérale opposée afin d'empêcher tout mouvement de ladite plateforme par rapport au carter principal, à une position rétractée dans laquelle la plateforme est libre de se translater par rapport au carter principal. Le téton peut par exemple être naturellement contraint dans sa position déployée sous l'effet d'une force de rappel et être ramené dans sa position rétractée par l'actionnement d'un système d'actionnement.

Selon un mode de réalisation, le carter principal comprend une base de carter, une extension de carter apte à se translater dans la direction longitudinale par rapport à ladite base de carter, ainsi que des moyens de blocage en translation de ladite extension de carter par rapport à ladite base de carter. Selon un exemple de réalisation, la base de carter est munie d'au moins un verrou apte à venir s'engager entre des crans prévus sur l'extension de carter, de manière à bloquer tout déplacement relatif entre la base de carter et l'extension de carter.

En coopérant entre elles par coulissement, la base de carter et l'extension de carter forment un système télescopique qui permet de varier la longueur totale du carter principal et ainsi d'adapter la base de fixation à des sièges passager de profondeurs variables.

Selon un mode de réalisation de l'invention, la première extrémité de la bielle est montée pivotante sur le carter principal, autour d'un axe de pivotement perpendiculaire au plan de coulissement et aligné avec l'axe de rotation du support pivotant dans la direction longitudinale, cet axe de pivotement étant défini dans un plan diamétral perpendiculaire au plan de coulissement. En outre, la deuxième extrémité de la bielle est avantageusement fixée au support pivotant de telle sorte que, compte tenu de l'angle de rotation maximal du support pivotant lors du coulissement de la plateforme, cette seconde extrémité reste toujours d'un même côté dudit plan diamétral.

Ainsi, le siège auto ne peut pivoter que dans un seul sens, de sorte que, dans sa deuxième position, il est toujours placé dans une position optimale d'utilisation, c'est-à-dire orienté sensiblement en direction de la portière du véhicule à côté de laquelle il est placé.

Selon un mode de réalisation, la bielle peut être fixée au support pivotant au moins à deux emplacements différents disposés de part et d'autre du plan diamétral lorsque la plateforme coulissante se trouve dans sa première position, de sorte que le sens de rotation du support pivotant lors de la translation de la plateforme peut être choisi librement.

Grâce à cette disposition, le siège peut être utilisé indifféremment du côté gauche ou droit du véhicule. Pour cela, il suffit, lors du montage de la base de fixation, de fixer la deuxième extrémité de la bielle sur l'emplacement du support de fixation correspondant au sens de pivotement souhaité.

Selon un mode de réalisation, la bielle et le support pivotant sont reliés au moyen d'un pion s'étendant dans l'épaisseur dudit support pivotant et maintenu en position sous l'effet d'une force de pression radiale. Par exemple, le carter principal peut comporter une ouverture et le support pivotant peut comporter en son centre un trou débouchant situé en regard de ladite ouverture. Une force de pression radiale peut alors être exercée sur le pion au moyen d'une tige pouvant être introduite par ledit trou débouchant et dont une extrémité est apte à s'engager dans une gorge latérale périphérique du pion et à venir en appui contre celui-ci. Grâce à ces dispositions, l'utilisateur peut aisément modifier le point d'attache de la bielle sur le support pivotant, et ainsi changer le sens de pivotement du siège auto. La base de fixation pourra par conséquent être utilisée facilement d'un côté puis de l'autre du véhicule.

Selon un mode de réalisation, un ressort de rappel monté à l'intérieur de ladite tige exerce un effort sur au moins un doigt faisant saillie à une extrémité de ladite tige et apte à venir en appui contre ledit pion, le ressort étant relié à un dispositif d'actionnement pouvant être actionné manuellement de manière à comprimer ledit ressort de rappel et à rétracter le pion vers l'intérieur de la tige.

Selon un mode de réalisation, les moyens de fixation comprennent un support de fixation comprenant une poignée d'actionnement et la base de fixation est munie d'une plaque de protection de forme allongée dans la direction longitudinale, située sous le support de fixation et non-solidaire en rotation de celui-ci, destinée à empêcher l'accès par le dessous à ladite poignée d'actionnement lorsque la plateforme se trouve dans sa première position. Cette disposition permet d'augmenter la sécurité de la base de fixation en empêchant l'accès à la poignée d'actionnement, notamment la poignée de déverrouillage du siège auto, lorsque le véhicule est en mouvement.

La présente invention concerne également un ensemble comprenant une base de fixation telle que décrite précédemment et un siège automobile pour enfant apte à être fixé sur cette base de fixation.

D'autres caractéristiques et avantages de l'invention ressortiront à la lecture de la description suivante d'exemples de réalisation de l'invention donnés à titre illustratif et non limitatif. Cette description fait référence aux feuilles de dessins annexés sur lesquelles :
- La figure 1 est une vue éclatée d'un exemple de réalisation de la base de fixation selon l'invention ;
- Les figures 1A et 1B sont des vues agrandies des détails notés A et B sur la figure 1 ;
- Les figures 2 et 3 sont des vues de dessous en perspective, partielles, de la base de fixation de la figure 1 ;
- La figure 4 est une vue de dessous schématique de la base de fixation selon l'invention, montrant le mécanisme de réglage du carter principal de la base de fixation de la figure 1 ;
- La figure 5 est une vue en perspective schématique des systèmes de blocage et de déblocage en translation de la plateforme coulissante par rapport au carter principal de la base de fixation de la figure 1 ;
- La figure 6 est une vue agrandie du détail noté C sur la figure 1 ;
- Les figures 7A et 7B sont des vues en perspective d'une base de fixation de la figure 1 sur laquelle est fixé un siège auto, respectivement dans sa première et sa deuxième position, selon un premier exemple d'utilisation de la base de fixation selon l'invention ;
- Les figures 8A et 8B sont des vues en perspective d'une base de fixation de la figure 1 sur laquelle est fixé un siège auto, respectivement dans sa première et sa deuxième position, selon un deuxième exemple d'utilisation de la base de fixation selon l'invention ;
- Les figures 9A à 9C sont des vues schématiques montrant la position de l'emplacement d'attache de la bielle lorsque la plateforme effectue un aller-retour entre sa première et sa deuxième position, selon une configuration de montage avantageuse ;
- La figure 10 montre une vue en coupe de la tige destinée à fixer la bielle sur le support de pivotement ;
- La figure 11 montre la plaque de protection et le support pivotant de la base de fixation en position montée.

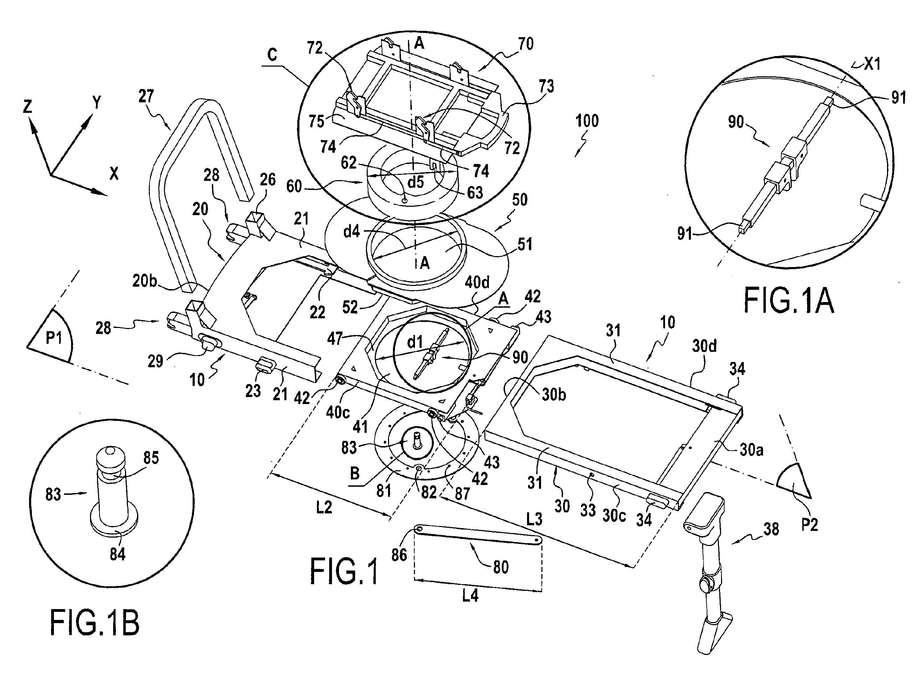

Sur la figure 1 sont représentés les principaux éléments constitutifs d'un exemple de base de fixation 100 pour siège auto.

Dans toute la suite de la description, et pour chaque élément de la base de fixation 100, la direction longitudinale est définie selon l'axe X qui s'étend de l'arrière vers l'avant, la direction transversale est définie selon l'axe Y qui s'étend de la gauche vers la droite et la direction de la hauteur est définie selon l'axe Z qui s'étend du bas vers le haut.

De manière générale, lorsque la base de fixation se trouve en position de fonctionnement à l'intérieur du véhicule, par exemple sur la banquette arrière du véhicule, l'axe X est orienté dans la direction principale du véhicule qui s'étend de l'arrière vers l'avant, l'axe Y est orienté dans la direction transversale du véhicule, de la gauche vers la droite, et l'axe Z est orienté dans la direction de la hauteur du véhicule, du sol vers le plafond.

La base de fixation 100 comporte un carter principal 10 et une plateforme coulissante 40 apte à se translater par rapport à ce carter principal 10 dans un plan de coulissement P1, suivant une direction longitudinale X, entre une première position et une deuxième position. Elle comporte en outre une bague 60 montée libre en rotation sur la plateforme coulissante 40 autour d'un axe orthogonal au plan de coulissement P1 de la plateforme, ainsi qu'un support de fixation 70 du siège auto, solidaire en rotation de la bague 60. La base de fixation 100 comporte enfin une bielle 80 dont une première extrémité 80a est reliée au carter principal 10 et une seconde extrémité 80b est reliée à la bague 60, et configurée de sorte que le mouvement de translation de la plateforme coulissante 40 entraîne la rotation de la bague 6 et donc du support de fixation 70.

Dans l'exemple illustré sur la figure 1, le carter principal 10 comprend une base de carter 20 et une extension de carter 30 aptes à coulisser l'une par rapport à l'autre.

Dans un plan principal P1, la base de carter 20 forme un U dont les branches latérales 21 constituent deux rails de guidage s'étendant dans la direction longitudinale X.

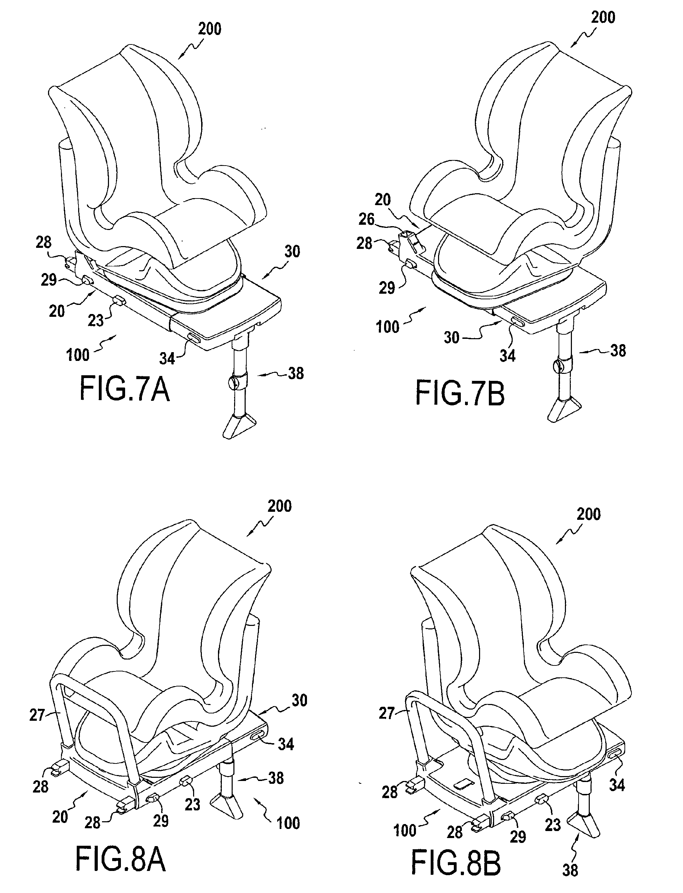

Lorsque la base de fixation 100 est montée à l'intérieur du véhicule, l'extrémité arrière 20b de la base de carter 20 est destinée à venir quasiment ou totalement en appui contre le dossier du siège passager. Dans l'exemple illustré sur la figure 1, la base de carter 20 comporte, de chaque côté, un emplacement de montage 26 dans lequel peut venir s'engager une extrémité d'un arceau de protection 27. Un tel arceau de protection 27 est utilisé en particulier lorsque le siège est placé dos à route (figures 8A et 8B). La base de carter comprend en outre deux pinces de verrouillage Isofix 28, destinées à se clipper sur deux points d'ancrage correspondants fixés entre l'assise et le dossier du siège passager. Dans l'exemple, les pinces de verrouillage 28 sont réglables en position par actionnement de boutons de réglage 29.

L'extension de carter 30 présente une forme de cadre rectangulaire, dont deux branches latérales 31 peuvent venir coulisser le long des rails 21 de la base de carter 20. Le plan principal P1 forme donc un plan de coulissement de l'extension de carter 30 par rapport à la base de carter 20. Selon une variante de réalisation, l'extension de carter 30 peut également présenter une forme de U.

Evidemment, on peut également prévoir d'inverser l'emboîtement des deux parties 20, 30 du carter principal 10. Dans ce cas, les branches latérales 21 de la base de carter 20 sont montées coulissantes le long des rails 31 de l'extension de carter 30.

En coulissant l'une par rapport à l'autre dans la direction longitudinale X, la base de carter 20 et l'extension de carter 30 font varier la longueur totale du carter principal 10, qui s'étend de l'extrémité arrière 20b de la base de carter à l'extrémité avant 30a de l'extension de carter 30.

De cette manière, il est possible d'adapter la base de fixation 100 à des sièges passagers de profondeur différente. Ceci est particulièrement avantageux lorsque la base de fixation 100 comprend un pied d'appui anti-rotation 38, tel que représenté sur la figure 1, fixé à l'extrémité avant 30a de l'extension de carter. Ce pied d'appui 38, généralement télescopique, peut être réglable en hauteur et éventuellement comprendre un amortisseur. Il peut également être pivotant. En prenant appui contre le plancher du véhicule, il participe à l'ancrage de la base de fixation 100 sur le siège passager, en complément d'autres moyens de fixation.

Des moyens de verrouillage sont prévus pour bloquer le mouvement relatif de translation de la base de carter 20 et de l'extension de carter 30.

Dans l'exemple, ces moyens de verrouillage sont présents sur un côté du carter principal 10 seulement. Ils peuvent évidemment être prévus indifféremment sur l'un ou l'autre ou les deux côtés du carter principal 10.

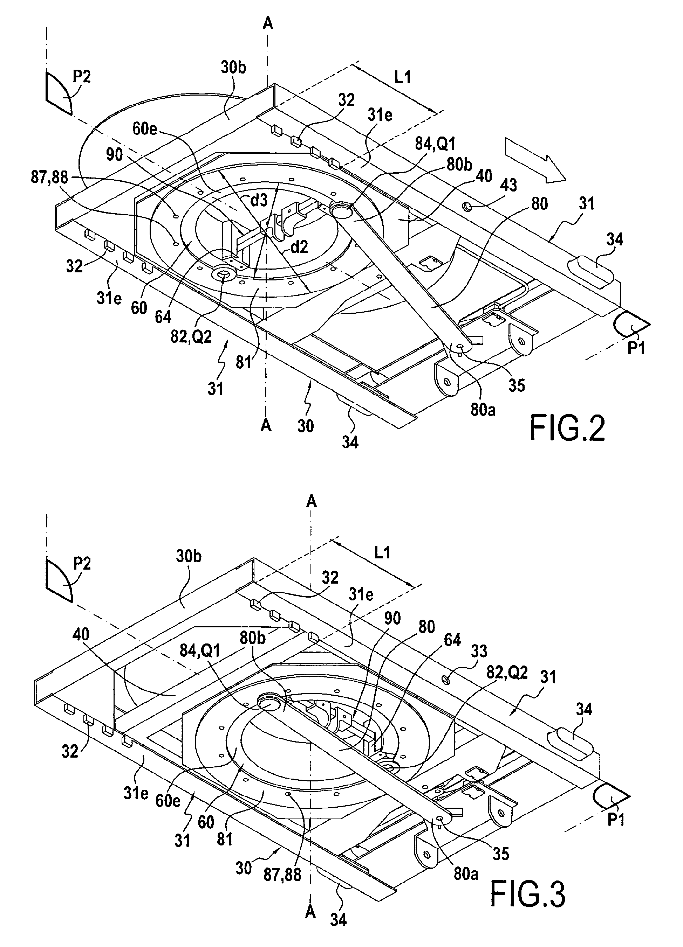

Les moyens de verrouillage comprennent une pluralité de crans 32 prévus sur la face inférieure 31e d'une branche latérale 31 de l'extension de carter 30. Dans l'exemple illustré sur la figure 2, ces crans 32 sont formés par de petites saillies parallélépipédiques, régulièrement réparties depuis l'extrémité arrière 30b de l'extension de carter 30, sur une distance L1 correspondant sensiblement au chemin maximal de coulissement souhaité entre la base de carter 20 et l'extension de carter 30.

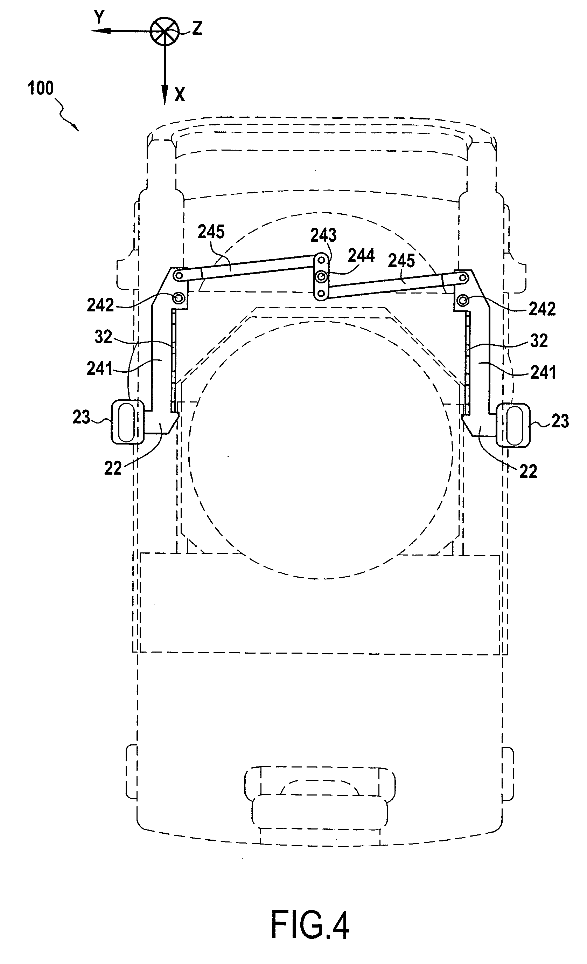

Les moyens de verrouillage comprennent en outre, sur la base de carter 20, un verrou 22, destiné à coopérer avec les crans 32. Comme décrit plus en détail dans la suite en référence notamment à la figure 4, le verrou peut être déplacé dans la direction transversale Y, de manière à passer d'une position verrouillée dans laquelle il est engagé entre deux crans 32 de l'extension de carter 30, empêchant tout déplacement relatif des deux parties du carter principal 10, à une position déverrouillée dans laquelle leur déplacement relatif est libéré.

Sous l'action d'un moyen de rappel (non représenté), le verrou 32 est naturellement contraint dans sa position verrouillée.

Le verrou 22 est solidaire d'un bouton de réglage 23 faisant saillie vers l'extérieur, sur le côté d'une branche latérale 21 de la base de carter 20. En tirant sur le bouton de réglage 23 dans une direction opposée à la force de rappel qui le maintient dans sa positon verrouillée, le verrou est désengagé des crans 32, de sorte que l'extension de carter 30 est libre en translation par rapport à la base de carter 20.

En pratique, lorsque l'utilisateur de la base de fixation 100 souhaite modifier la longueur totale du carter principal 10 afin de l'adapter à la profondeur du siège de son véhicule, il lui suffit, à l'aide d'une main, de tirer le bouton de réglage 23 vers l'extérieur, puis, avec l'autre main, de déplacer l'une par rapport à l'autre les deux parties 20, 30 du carter principal 10. Il suffit ensuite de relâcher le bouton de réglage 23, pour que le verrou 22 de la base de carter 20 vienne s'engager à nouveau entre deux crans 32 de l'extension de carter 30.

Comme indiqué précédemment et illustré sur la figure 4, les moyens de verrouillage 22, 32 décrits ci-dessus peuvent être prévus de manière identique de chaque côté du carter principal 10.

Dans ce cas, on peut avantageusement prévoir que les deux verrous 22 situés respectivement de chaque côté de la base de carter 20 fonctionnent de manière synchrone. De telles dispositions sont par exemple obtenues grâce à un système de barres articulées tel qu'illustré sur la figure 4. Dans ce système de barres articulées, chaque verrou 22 est monté à une extrémité distale d'une barre latérale 241 montée pivotante autour d'un axe matériel 242 de la base de carter 20 dirigé dans la direction de l'axe Z. Les deux barres latérales 241 sont reliées entre elles par trois autres barres articulées : une barre centrale 243 montée pivotante autour d'un axe matériel 244 prévu sur la base de carter 20 et deux barres intermédiaires 245 reliées chacune à l'une des barres latérales 241 d'une part et à la barre centrale 243 d'autre part. Grâce à un tel mécanisme d'articulation, chaque mouvement imposé à l'un des deux verrous 22 est automatiquement transmis au second verrou 22.

Ainsi, quel que soit le positionnement de la base de fixation 100 à l'intérieur du véhicule, l'utilisateur peut actionner, à l'aide d'une main, celui des deux boutons de réglage 23 auquel il a accès le plus facilement et, avec son autre main, déplacer l'extension de carter 30 par rapport à la base de carter 20.

Le carter principal 10 est destiné à accueillir une plateforme coulissante 40. Comme illustré sur la figure 1, la plateforme coulissante 40 présente une forme de cadre, de préférence carré, muni en son centre d'une ouverture circulaire 41 de diamètre d1. La longueur L2 de la plateforme coulissante dans la direction longitudinale X est inférieure à la longueur du carter principal 10 et plus particulièrement à la longueur L3 de l'extension de carter 30.

Les branches latérales 31 de l'extension de carter 30, qui viennent coulisser dans les rails 21 de la base de carter 20, présentent elles-mêmes un profil transversal en forme de U renversé, de sorte qu'elles forment deux rails de guidage parallèles s'étendant dans la direction longitudinale X. Grâce à des roulettes 42 prévues sur ses côtés latéraux 40c et 40d, la plateforme 40 est montée coulissante le long de ces rails de guidage 31, dans le plan principal P1 qui forme plan de coulissement de la plateforme 40. Du fait du décrochement formé entre les rails 31 de l'extension de carter 30 et ceux 21 de la base de carter 20, il est préférable, pour éviter tout blocage du système, que la plateforme coulissante ne se translate que le long des rails 31 de l'extension de carter 30.

La base de fixation 100 comporte des moyens de blocage de la plateforme coulissante 40 par rapport au carter principal 10. Ces moyens sont prévus pour permettre le blocage en translation de la plateforme 40 lorsque celle-ci se trouve dans sa première position (figure 2).

On rappelle que pour toute la présente description, la première position correspond à la position dans laquelle se trouve la plateforme coulissante 40 lorsque le siège est placé dans sa position réglementaire, c'est-à-dire dos ou face à la route et le plus près possible du dossier du siège passager. Par conséquent, lorsqu'elle se trouve dans sa première position, la plateforme 40 est dans sa position la plus proche de la base de carter 20.

Comme illustré sur la figure 1, la plateforme 40 porte, sur chacun des ses côtés latéraux 40c et 40d, un téton 43 monté mobile dans la direction transversale Y, et destiné à pouvoir passer d'une position déployée dans laquelle, lorsque la plateforme 40 se trouve dans sa première position, il coopère avec un orifice 33 formé dans une face latérale opposée du carter principal (ici la face latérale d'une branche latérale 31 de l'extension de carter 30), à une position rétractée, dans laquelle il est désengagé de cet orifice 33.

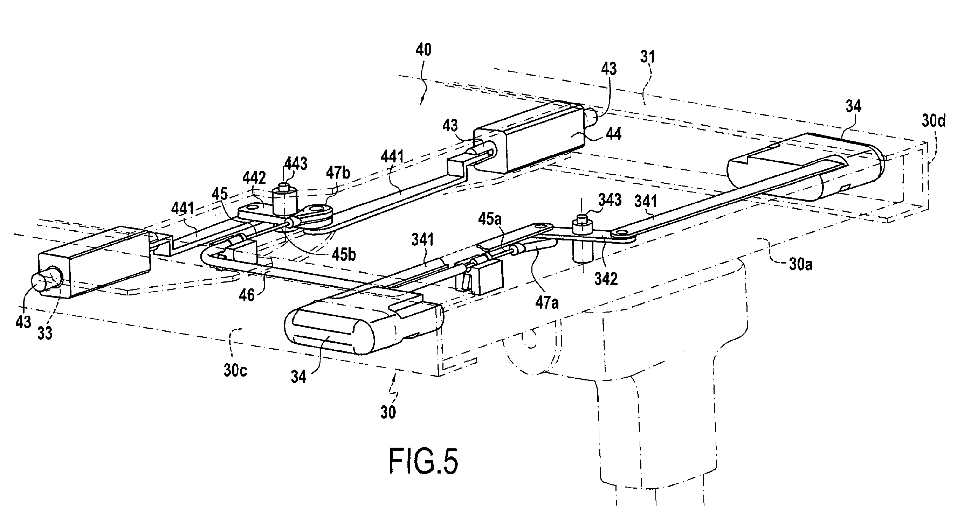

Comme illustré en détail sur la figure 5, chaque téton 43 est monté mobile en translation sur un boîtier fixe 44 de la plateforme coulissante 40. Sous l'effet d'un ressort de rappel (non représenté) monté à l'intérieur de ce boîtier fixe 44, le téton 43 est naturellement contraint vers sa position déployée.

Ainsi, chaque téton 43 venant automatiquement en engagement avec le trou correspondant 33 du carter principal 10 lorsque la plateforme coulissante 40 est dans sa première position, l'utilisateur s'assure aisément de la bonne fixation du siège auto, en écoutant le cliquetis émis lors de l'engagement des tétons 43 dans les trous correspondants 33 de l'extension de carter. Dans le cas où les trous 33 de l'extension de carter sont débouchants, il peut également vérifier visuellement la position des tétons 43, en particulier si ceux-ci présentent une couleur différente de celle du carter 10 et de la plateforme coulissante 40.

Les tétons 43 peuvent être ramenés dans leur position rétractée par l'actionnement de boutons d'actionnement 34 prévus sur les cotés latéraux gauche et droit 30c, 30d de l'extension de carter 30, à proximité de son extrémité avant 30a.

A son extrémité dirigée vers l'intérieur de la plateforme 40, chaque téton 43 est relié à une barre intermédiaire arrière 441, elle-même reliée à une barre centrale arrière 442 montée pivotante autour d'un axe matériel 443 prévu sur la plateforme 40 et dirigé dans la direction de l'axe Z.

Chaque bouton d'actionnement 34 est solidaire d'une barre intermédiaire avant 341, qui est reliée, à son extrémité opposée, à une barre centrale avant 342 montée pivotante autour d'un axe matériel 343 de l'extension de carter 30 dirigé dans la direction de l'axe Z.

Le mouvement de pivotement de la barre centrale avant 342 est transmis à la barre centrale arrière 442 au moyen d'un fil non extensible 45, enfilé dans une gaine de guidage 46 et terminé à sa première extrémité 45a par une biellette 47a fixée à la barre centrale avant 342 et à sa deuxième extrémité 45b par une biellette 47b fixée à la barre centrale arrière 442.

Lorsqu'au moins un des boutons d'actionnement 34 est actionné, les deux barres intermédiaires avant 341 se déplacent l'une vers l'autre, entraînant le pivotement de la barre centrale avant 342 autour de son axe 343 et le déplacement de la première biellette 47a vers la droite (vu dans la direction de la figure 5). Sous l'effet de la traction du fil, la deuxième biellette 47b se déplace vers la gauche, entraînant le pivotement de la barre centrale arrière 442 et le déplacement des tétons 43 vers leur position rétractée.

La plateforme coulissante 40 est alors libre en translation par rapport au carter principal 10, et peut être déplacée jusqu'à sa deuxième position.

Le système de barres articulées décrit précédemment n'est donné qu'à titre d'exemple. D'autres systèmes équivalents pourront bien évidemment être envisagés pour l'actionnement des tétons 43.

Comme illustré sur la figure 1, la bague 60 formant support pivotant est montée dans l'orifice circulaire 41 de la plateforme 40.

Comme indiqué précédemment, la base de fixation 100 comporte une bielle 80, dont une première extrémité 80a est reliée à l'extrémité avant 30a de l'extension de carter 30 et une seconde extrémité 80b est reliée à la bague 60. La longueur L4 de bielle et le positionnement du ou des emplacements d'attache de la bielle sur la bague 60 permettent que la bague 60 pivote autour de son axe A-A orthogonal au plan de coulissement P1 de la plateforme 40, lorsque la plateforme se translate dans la direction longitudinale X.

Comme illustré sur les figures 2 et 3, la première extrémité 80a de la bielle 80 est montée pivotante sur le carter principal 10, autour d'un axe de pivotement 35 perpendiculaire au plan de coulissement P1 et aligné avec l'axe A-A de la bague 60 dans la direction longitudinale X. L'axe de pivotement 35 est défini dans un plan diamétral P2 perpendiculaire au plan de coulissement P1. La deuxième extrémité 80b de la bielle 80 est fixée à la bague 60 au niveau d'un emplacement d'attache Q1 espacé de ce plan diamétral P2.

Dans l'exemple de réalisation illustré sur les figures 2 et 3, la bague 60 présente deux emplacements d'attache Q1, Q2 pour la bielle 80. Lorsque la plateforme 40 se trouve dans sa première position (figure 2), ces deux emplacements Q1, Q2 sont placés de part et d'autre du plan diamétral P2. Plus particulièrement, ils sont disposés de façon symétrique par rapport à ce plan P2.

En choisissant l'emplacement d'attache de la bielle 80, l'utilisateur peut définir le sens de pivotement du siège, et l'adapter selon que la base de fixation 100 est destinée à être fixée du côté gauche ou du côté droit du véhicule et selon que le siège est placé dos ou face à la route lorsqu'il se trouve dans sa position réglementaire.

Les moyens de fixation de la bielle 80 à la bague 60 vont à présent être décrits plus en détail en référence aux figures 1 à 3 et 10.

Dans sa direction axiale (correspondant à la direction de l'axe Z en position montée), la bague 60 comporte deux trous principaux 62 qui constituent respectivement les emplacements d'attache Q1, Q2.

Ces trous 62 ne sont pas diamétralement opposés. Dans la direction d'une corde parallèle ou confondue avec le plan principal P1 et reliant les axes respectifs des trous principaux 62, la bague 60 comporte par ailleurs deux trous traversant 63. Les trous 63 sont coaxiaux et débouchent tous deux vers l'intérieur de la bague 60.

Sur son côté inférieur 60e, la bague 60 comporte en outre une pluralité de trous (non représentés) de faible diamètre, régulièrement répartis dans sa direction circonférentielle.

Une rondelle 81, dont le diamètre extérieur d2 est supérieur au diamètre d1 de l'orifice 41 et dont le diamètre intérieur d3 est inférieur au diamètre d1 de l'orifice 41, est destinée à bloquer le mouvement de la bague 60 vers le haut dans la direction de l'axe Z. Pour cela, la rondelle 81 comporte une pluralité de trous traversant de faible diamètre 87 destinés à être placés en regard des trous correspondants (non représentés) de la bague 60. La bague 60 et la rondelle 81 sont ainsi fixées l'une à l'autre à l'aide d'une pluralité de vis 88.

Par ailleurs, la rondelle 81 est percée de deux trous principaux 82 prévus pour être placés en regard des trous principaux 62 de la bague 60.

La bielle 80 et la bague 60 sont assemblées au moyen d'une goupille 83, telle que représentée en détail sur la figure 1B, comportant une tête 84 et une gorge latérale périphérique 85.

L'opération d'assemblage est réalisée de la manière suivante : La bielle 80, montée pivotante autour de l'axe 35, est déplacée jusqu'à ce qu'un trou 86 formé à son extrémité distale 80b soit coaxial avec l'un des trous 82 de la rondelle 81, lequel, comme indiqué précédemment, est lui-même coaxial avec l'un des trous 62 de la bague 60. La goupille 83 est alors insérée dans le trou 86 de la bielle 80 puis dans l'épaisseur de la bague 60, jusqu'à ce que sa tête 84 vienne en appui contre la bielle 80. Dans cette position d'assemblage, la gorge latérale périphérique 85 de la goupille 83 communique avec l'un des trous 63 de la bague 60.

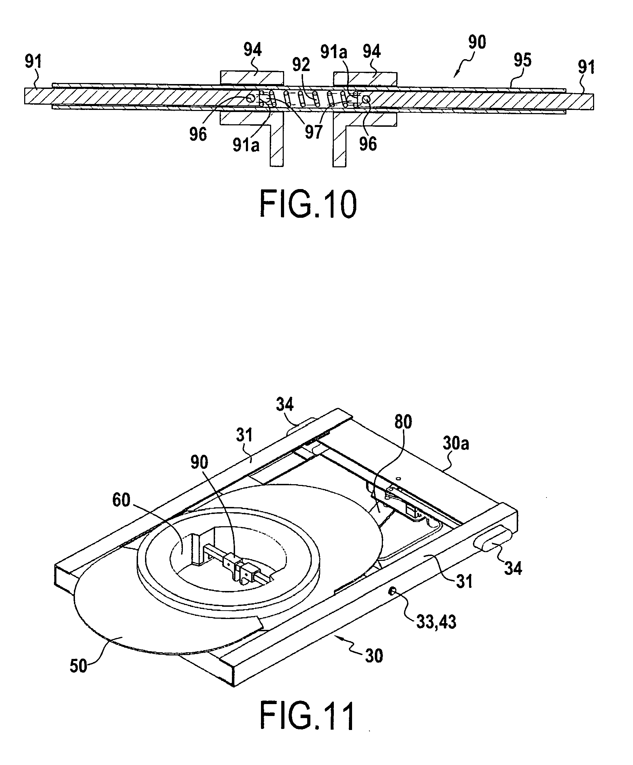

La goupille 83 est alors maintenue en position à l'aide d'une tige 90, représentée plus en détail sur les figures 1A et 10.

Dans l'exemple illustré, la tige 90 comporte un corps principal creux 95 dans lequel sont montés deux doigts 91. Sous l'effet d'un ressort 92 monté entre les deux doigts 91 et en appui sur leurs faces d'extrémités internes respectives 91a, les doigts 91 sont naturellement contraints dans une position déployée dans laquelle ils font saillie à l'extérieur du corps principal 95.

Deux poussoirs 94 sont montés coulissants sur le corps principal 95. Chaque poussoir 94 est solidaire du déplacement d'un doigt 91 grâce à une goupille 96 traversant le poussoir 94, une lumière oblongue 97 du corps principal 95 s'étendant dans la direction longitudinale X1 de la tige 90 ainsi que le doigt 91. Lorsque le ressort 92 est détendu, chaque goupille vient en butée contre une extrémité de la lumière oblongue 97.

Lorsque les deux poussoirs 94 sont manuellement déplacés l'un vers l'autre, chaque goupille 96 se déplace vers l'extrémité opposée de la lumière oblongue 97, le ressort 92 est comprimé, et les doigts 91 se retrouvent dans leur position rétractée. Dans cette position, la tige 90 peut être introduite facilement à l'intérieur de la bague 60, et positionnée de manière à s'étendre dans la direction de la corde reliant les deux trous débouchant 63. Lorsque cette position est atteinte, l'utilisateur relâche les poussoirs 94. Sous l'effet du ressort de rappel 92, les doigts 91 de la tige 90 tendent naturellement à revenir dans leur position déployée à l'intérieur des trous débouchant 63.

La tige 90 se trouve alors dans sa position de verrouillage : L'un des doigts 91 s'engage dans la gorge latérale périphérique 85 de la goupille et vient en appui sur celle-ci. L'autre doigt vient en appui directement contre la bague 60, sur une face interne du trou axial 62 dans lequel il est inséré. Sous l'effet de la force de pression radiale exercée par le doigt 91 de la tige 90, la goupille 83 est maintenue en position dans l'épaisseur de la bague 60, dans sa position d'assemblage.

On notera que dans le mode de réalisation représenté sur la figure 1, la bague 60 comporte, à sa périphérie intérieure, deux rails de guidage 64 pour la tige 90. Chacun de ces rails 64 s'étend dans la direction axiale de la bague, depuis sa face inférieure 60e jusqu'à un trou débouchant 63. Ces rails 64 permettent de faciliter l'insertion de la tige 90 dans les trous débouchant 63.

Evidemment, la tige 90 peut être remplacée par tout autre dispositif de blocage amovible, adapté à maintenir la goupille 83 en position à l'intérieur du trou 62 de la bague 60.

Un exemple d'utilisation de la base de fixation 100 va à présent être décrit plus en détail en référence aux figures 7A à 9C.

La figure 7A illustre une base de fixation 100 et un siège auto 200 placé dans sa première position. La base de fixation 100 est fixée sur le côté droit du véhicule, par exemple sur la banquette arrière, et le siège 200 est orienté face à la route. Dans ce cas, pour passer dans sa deuxième position, le siège 200 pivote dans le sens des aiguilles d'une montre.

Grâce au mouvement de translation de la plateforme 40, le siège auto ne vient pas en butée contre le dossier du siège passager et peut donc pivoter librement. L'angle de pivotement de la bague 60 (et donc du siège auto) est ici égal à 90°, de sorte que, dans sa deuxième position, le siège 200 est orienté dans la direction transversale du véhicule et dirigé directement vers la portière du véhicule. Sur la figure 7B, on a illustré le siège 200 dans cette deuxième positon.

Le pivotement du siège auto permet de faciliter les opérations d'installation de l'enfant dans le siège et de retrait de l'enfant. Lorsque, comme dans l'exemple, l'angle de pivotement de la bague 60 (et donc du siège) est environ égal à 90°, le siège est orienté directement vers la portière et fait face à l'utilisateur, lorsqu'il se trouve dans sa deuxième position. Evidemment, cet exemple n'est pas limitatif, et tout angle de pivotement permettant de faciliter l'utilisation du siège par son utilisateur peut être envisagé. Un tel angle est généralement compris entre 30° et 150°.

Les figures 2 et 3 illustrent la base de fixation 100 en vue de dessous respectivement dans les configurations des figures 7A et 7B.

Lorsque la plateforme 40 se trouve dans sa première position (figure 2), l'emplacement d'attache Q1 de la bielle 80 sur la bague 60 est situé sur le côté gauche de la base de fixation 100. Avec cette configuration, lorsque la plateforme 40 se translate dans la direction longitudinale X depuis sa première vers sa deuxième position, la bague 60 pivote par rapport à la plateforme dans le sens des aiguilles d'une montre f1, d'un angle égal ici à 90°.

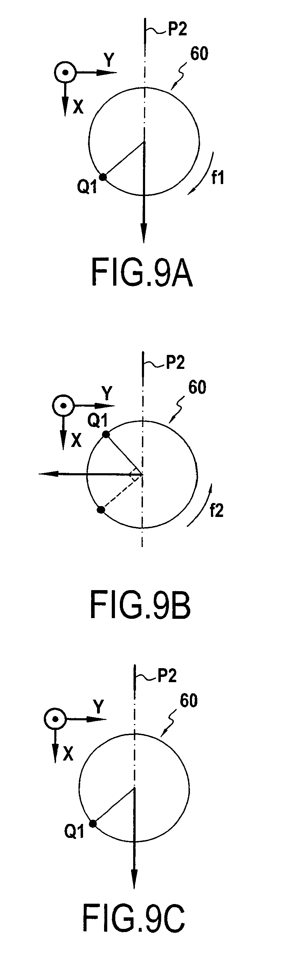

La figure 9A illustre schématiquement, en vue de dessus, la position de l'emplacement d'attache Q1 par rapport au plan diamétral P2, lorsque la plateforme 40 se trouve dans sa première position. Lorsque la plateforme coulissante 40 arrive dans sa deuxième position (figure 9B), l'emplacement du point d'attache Q1 a pivoté d'un angle égal à 90°, mais reste toujours d'un même côté du plan diamétral P2. Lorsque la plateforme coulissante 40 retourne finalement dans sa première position (figure 9C), la bague 60 pivote dans le sens inverse des aiguilles d'une montre f2 et reprend son orientation initiale.

Si, au contraire, l'emplacement d'attache Q1 de la bielle était ainsi placé que, lorsque la plateforme 40 se translate depuis sa première vers sa deuxième position, il passe d'un côté à l'autre du plan diamétral P2, le siège initialement positionné face à la route se retrouverait finalement dos à la route, suite à un aller-retour complet de la plateforme 40.

De manière générale, il convient donc de choisir la position de l'emplacement d'attache de la bielle 80 sur la bague 60 compte tenu du chemin maximal de la plateforme coulissante 40 et de l'angle de rotation maximal de la bague 60, de sorte que cet emplacement reste toujours d'un même côté du plan diamétral P2.

La figure 8A illustre un autre exemple d'utilisation dans lequel le siège 200, dans sa première position, est toujours placé du côté droit du véhicule, mais cette fois dos à la route.

Pour arriver dans sa deuxième position (figure 8B) dans laquelle il fait face à la portière adjacente, le siège 200 pivote d'un angle environ égal à 90° dans le sens inverse des aiguilles d'une montre. Dans ce cas, c'est donc l'emplacement d'attache Q2 qui est adapté.

Les exemples décrits ne sont évidemment pas limitatifs et, grâce à la base de fixation selon l'invention, le siège auto peut être utilisé indifféremment à droite ou à gauche du véhicule et dans l'une des deux positions réglementaires c'est-à-dire dos ou face à la route.

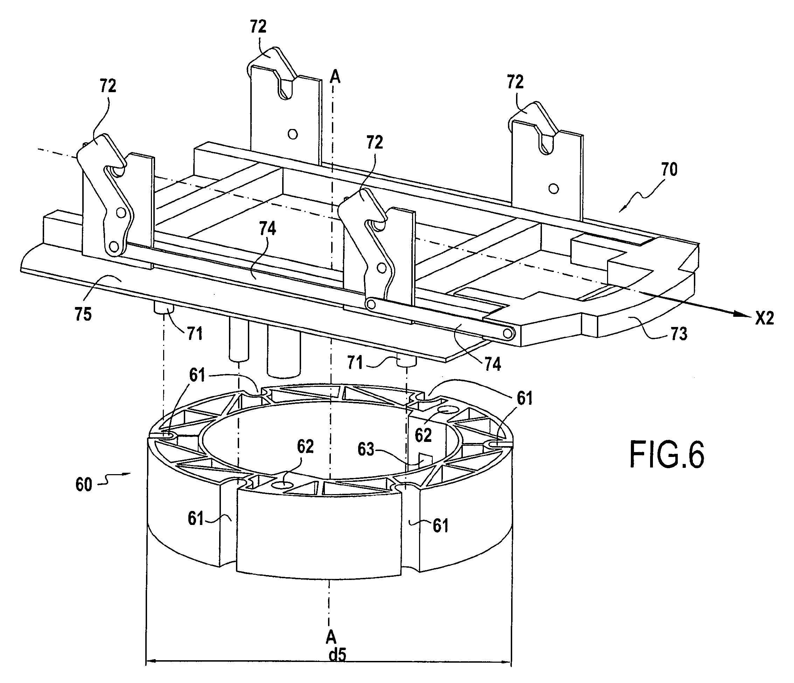

Le support de fixation 70 du siège auto va à présent être décrit plus en détail en référence aux figures 1 et 6.

Comme indiqué précédemment, ce support de fixation 70 est solidaire en rotation de la bague 60. Conformément à la figure 6 qui montre une vue agrandie du détail nommé « C » de la figure 1, la bague 60 présente pour cela, à sa périphérie, une pluralité d'encoches 61 s'étendant dans la direction axiale de la bague 60.

Ces encoches 61 sont destinées à recevoir à force des saillies 71 de forme complémentaire s'étendant depuis la face inférieure d'une plaque rectangulaire 75 du support de fixation 70.

Grâce à ce montage, la plaque 75 du support de fixation 70 empêche tout mouvement de la bague 60 vers le bas dans la direction de l'axe Z.

Le support de fixation 70 comporte plusieurs crochets de verrouillage 72 permettant l'ancrage du siège auto. Lors de sa fixation, le siège auto pourra venir s'encliqueter directement sur ces crochets de verrouillage 72.

Sous l'effet de ressorts de rappel (non représentés), les crochets de verrouillage 72 sont naturellement contraints dans une position verrouillée. Leur déverrouillage s'opère par actionnement d'une poignée de déverrouillage 73 à laquelle les crochets 72 sont reliés par des bielles 74.

La poignée de déverrouillage 73, placée de telle manière à être située sous l'extrémité avant du siège auto lorsque celui-ci est en position montée, peut être actionnée par l'application d'une force de traction dans la direction longitudinale X2 du support pivotant 70.

Lorsque la poignée 73 est actionnée, les bielles 74 transmettent aux crochets 72 une force s'opposant à la force de rappel des ressorts et les crochets 72 se desserrent, permettant le déblocage du siège. Lorsque la poignée 73 est relâchée, les crochets 72 reviennent naturellement dans leur position de verrouillage sous l'action des ressorts de rappel.

Les encoches 61 de la bague 60 et les saillies 71 du support de fixation 71 sont prévus pour que le support de fixation 70 puisse être emboîté sur la bague 60 suivant deux configurations possibles. Dans une première configuration, le support de fixation 70 est tel que (lorsque la plateforme coulissante 40 se trouve dans sa première position) la direction longitudinale X2 est parallèle à X et la poignée de déverrouillage 73 est orientée vers l'avant. Dans ce cas, une fois le siège auto fixé sur le support de fixation 70, celui-ci est orienté vers l'avant, c'est-à-dire face à la route. Dans une seconde configuration, le support de fixation 70 est tel que la direction longitudinale X2 est parallèle à X et la poignée de déverrouillage 73 est orientée vers l'arrière. Dans ce cas, une fois le siège auto fixé sur le support de fixation 70, celui-ci est orienté vers l'arrière, c'est-à-dire dos à la route

Un autre aspect de l'invention va à présent être décrit en référence aux figures 1 et 11.

Comme illustré sur la figure 1, la base de fixation 100 comprend une plaque de protection 50, de forme allongée dans la direction longitudinale X. Dans l'exemple illustré, la plaque de protection 50 présente une forme sensiblement ovale.

La plaque de protection 50 comporte une ouverture centrale circulaire 51, dont le diamètre d4 est légèrement supérieur au diamètre extérieur d5 de la bague 60, et sensiblement identique au diamètre d1 de l'orifice central 41 de la plateforme coulissante 40. De cette façon, la bague 60 peut être montée libre en rotation à l'intérieur de l'ouverture 51 de la plaque de protection 50. La figure 11 montre la plaque de protection 50 et la bague 60 en position montée.

Sur son côté inférieur, la plaque de protection 50 présente une saillie 52 de forme particulière, destinée à venir coopérer avec une partie creuse 47 de forme complémentaire prévue sur la plateforme coulissante 40. Dans l'exemple illustré sur la figure 1, la saillie 52 de la plaque de protection 50 présente une forme polygonale. De manière plus générale, elle pourra présenter toute forme adaptée à empêcher la rotation de la plaque de protection 50 par rapport à la plateforme coulissante 40. Selon d'autres modes de réalisation, la plaque de protection 50 pourra présenter une pluralité de saillies et la plateforme coulissante pourra présenter une pluralité de parties creuses complémentaires. Selon encore d'autres exemples de réalisation, la plateforme coulissante 40 pourra présenter des saillies destinées à coopérer avec des parties en creux complémentaires de la plaque de protection 50.

Lorsque la plateforme coulissante 40, la plaque de protection 50, la bague 60 et le support de fixation 70 sont en position montée, et lorsque la plateforme coulissante 40 se trouve dans sa première position, le support de fixation 70 se retrouve, au moins en partie, situé au-dessus de la plaque de protection 50, à une distance très faible de celle-ci. Comme illustré sur la figure 1, les dimensions de la plaque de protection 50 sont telles qu'au moins la poignée de déverrouillage 73 est placée au-dessus de la plaque de protection 50. On notera que la forme ovale de la plaque de protection permet d'orienter le support de fixation 70 indifféremment dans une direction ou dans l'autre (i.e. poignée de déverrouillage 73 orientée vers l'avant ou vers l'arrière), en garantissant que la poignée de déverrouillage soit toujours située au-dessus de la plaque de protection 50.

Lorsque, comme représenté sur les figures 7A, 7B, 8A et 8B, le siège auto est fixé sur le support de fixation 70, au moins une partie du support de fixation 70, et en particulier la poignée de déverrouillage 73 est complètement recouverte par le siège auto 200.

Par conséquent, lorsque le siège auto 200 se trouve dans sa première position (figures 7A et 8A), la poignée 73 n'est accessible ni par le dessus (car elle est recouverte par le siège auto 200), ni par le dessous (puisqu'elle est placée au-dessus de la plaque de protection 50 à une très faible distance de celle-ci).

Lorsque, le siège auto 200 se trouve dans sa deuxième position (figures 7B et 8B), la poignée 73 n'est toujours pas accessible par le dessus car elle est toujours recouverte par le siège auto 200, le support de fixation 70 et le siège auto 200 étant solidaires en rotation. Toutefois, le support de fixation 70 ayant une longueur totale supérieure à la largeur de la base de fixation 100, la poignée de déverrouillage 73 et l'extrémité du siège auto 200 dépassent du carter principal lorsque la plateforme coulissante 40 se trouve dans sa deuxième position. La poignée 73 située sous le siège devient ainsi accessible pour l'utilisateur.

Grâce à ces dispositions, la base de fixation 100 permet de ne rendre accessible la poignée de déverrouillage 73 que lorsque la plateforme coulissante 40 se trouve dans sa deuxième position et lorsque le siège 200 est pivoté de manière à faire face à la portière adjacente. De cette manière, la poignée 73 est totalement inaccessible au cours du trajet du véhicule, lorsque le siège auto 200 est dans sa position réglementaire, ce qui empêche tout déverrouillage malencontreux du siège 200 à l'insu des parents et/ou conducteurs du véhicule.

## Revendications

1. Base de fixation (100) pour un siège automobile pour enfant, laquelle comprend :
- un carter principal (10, 20, 30) muni de moyens de guidage en translation (31),
- une plateforme coulissante (40) apte à se translater par rapport audit carter principal (10, 20, 30) dans un plan de coulissement (P1), suivant une direction longitudinale (X), entre une première position et une deuxième position, en coopérant avec les dits moyens de guidage en translation (31),
- un support pivotant (60) monté libre en rotation sur ladite plateforme coulissante (40) autour d'un axe (A-A) orthogonal au plan de coulissement (P1) de ladite plateforme (40),
- des moyens de fixation (70, 72) du siège automobile pour enfant, solidaires en rotation dudit support pivotant (60),
et **caractérisée en ce qu'**elle comprend :
- une bielle (80) dont une première extrémité (80a) est reliée au carter principal (10, 20, 30) et une seconde extrémité (80b) est reliée au support pivotant (60), et configurée de sorte que le mouvement de translation de la plateforme coulissante (40) entraîne la rotation du support pivotant (60).

2. Base de fixation (100) selon la revendication 1, comprenant en outre des moyens de blocage en translation (33, 43) de ladite plateforme coulissante (40) par rapport au carter principal (10, 20, 30) lorsque celle-ci se trouve dans sa première position, et des moyens de déblocage (34) permettant de libérer le mouvement de translation de ladite plateforme (40).

3. Base de fixation (100) selon la revendication 2, dans laquelle la plateforme coulissante (40) comporte au moins une face latérale de plateforme s'étendant dans la direction longitudinale (X) et le carter principal (10, 20, 30) comporte au moins une face latérale de carter s'étendant dans la direction longitudinale (X) et opposée à ladite face latérale de plateforme, et dans laquelle la plateforme coulissante (40) ou le carter (10, 20, 30) porte au moins un téton (43) faisant saillie par rapport à sa face latérale, ledit téton (43) pouvant passer d'une position déployée dans laquelle il coopère avec un orifice (33) formé dans la face latérale opposée afin d'empêcher tout mouvement de ladite plateforme (40) par rapport au carter principal (10, 20, 30), à une position rétractée dans laquelle la plateforme (40) est libre de se translater par rapport au carter principal (10, 20, 30).

4. Base de fixation (100) selon la revendication 3, dans laquelle ledit téton (43) est naturellement contraint dans sa position déployée sous l'effet d'une force de rappel et ledit téton (43) peut être ramené dans sa position rétractée par l'actionnement d'un système d'actionnement (34, 341, 342, 45, 441, 442, 47a, 47b).

5. Base de fixation (100) selon l'une quelconque des revendications précédentes, dans laquelle le carter principal (10, 20, 30) comprend une base de carter (20), une extension de carter (30) apte à se translater dans la direction longitudinale (X) par rapport à ladite base de carter (20), ainsi que des moyens de blocage en translation (22, 32) de ladite extension de carter (30) par rapport à ladite base de carter (20).

6. Base de fixation (100) selon la revendication 5, dans laquelle la base de carter (20) est munie d'au moins un verrou (22) apte à venir s'engager entre des crans (32) prévus sur l'extension de carter (30), de manière à bloquer tout déplacement relatif entre la base de carter (20) et l'extension de carter (30).

7. Base de fixation (100) selon l'une quelconque des revendications précédentes, dans laquelle la première extrémité (80a) de la bielle (80) est montée pivotante sur le carter principal (10, 20, 30), autour d'un axe de pivotement (35) perpendiculaire au plan de coulissement (P1) et aligné avec l'axe de rotation (A-A) du support pivotant (60) dans la direction longitudinale (X), ledit axe de pivotement (35) étant défini dans un plan diamétral (P2) perpendiculaire au plan de coulissement (P1), et dans laquelle la deuxième extrémité (80b) de la bielle (80) est fixée au support pivotant (60) de telle sorte que, compte tenu de l'angle de rotation maximal du support pivotant lors du coulissement de la plateforme (40), cette seconde extrémité (80b) reste toujours d'un même côté dudit plan diamétral (P2).

8. Base de fixation (100) selon la revendication 7, dans laquelle la bielle (80) peut être fixée au support pivotant (60) au moins à deux emplacements différents (Q1, Q2) disposés de part et d'autre dudit plan diamétral (P2), de sorte que le sens de rotation du support pivotant (60) lors de la translation de la plateforme (40) peut être choisi librement.

9. Base de fixation (100) selon l'une quelconque des revendications précédentes, dans laquelle la bielle (80) et le support pivotant (60) sont reliés au moyen d'une goupille (83) s'étendant dans l'épaisseur dudit support pivotant (60) et maintenue en position sous l'effet d'une force de pression radiale.

10. Base de fixation (100) selon la revendication 9, dans laquelle le carter principal (10, 20, 30) comporte une ouverture et le support pivotant (60) comporte en son centre un trou débouchant situé en regard de ladite ouverture, et dans laquelle ladite force de pression radiale est exercée au moyen d'une tige (90) pouvant être introduite par ledit trou débouchant et dont une extrémité (91) est apte à s'engager dans une gorge latérale périphérique (85) de ladite goupille (83) et à venir en appui contre ladite goupille (83).

11. Base de fixation (100) selon la revendication 10, dans laquelle un ressort de rappel (92) monté à l'intérieur de ladite tige (90) exerce un effort sur au moins un doigt (91) faisant saillie à une extrémité de ladite tige (90) et apte à venir en appui contre ladite goupille (83), ledit ressort étant relié à un dispositif d'actionnement (94, 96) pouvant être actionné manuellement de manière à comprimer ledit ressort de rappel (92) et à rétracter ledit doigt (91) vers l'intérieur de la tige (90).

12. Base de fixation (100) selon l'une quelconque des revendications précédentes, dans laquelle les moyens de fixation comprennent un support de fixation (70) muni d'une poignée d'actionnement (73), ladite base de fixation (100) comprenant en outre une plaque de protection (50) de forme allongée dans la direction longitudinale (X), située sous le support de fixation (70) et non-solidaire en rotation de celui-ci, destinée à empêcher l'accès par le dessous à ladite poignée d'actionnement (73) lorsque la plateforme (40) se trouve dans sa première position.

13. Ensemble comprenant une base de fixation (100) selon l'une quelconque des revendications précédentes et un siège automobile pour enfant apte à être fixé sur ladite base de fixation (100).

## Claims

1. Attachment base (100) for a car seat for a child, which includes:
- a main frame (10, 20, 30) equipped with means of guidance in translation (31),
- a sliding platform (40) capable of translating with respect to said main frame (10, 20, 30) in a sliding plane (P1), in a longitudinal direction (X), between a first position and a second position, by cooperating with said means of guidance in translation (31),
- a pivoting support (60) mounted free to rotate on said sliding platform (40) about an axis (A-A) that is orthogonal to the sliding plane (P1) of said platform (40),
- means (70, 72) for attaching the car seat for a child, attached so as to rotate with said pivoting support (60) and **characterized in that** it contains:
- a connecting rod (80), a first end (80a) whereof is connected to the main frame (10, 20, 30) and a second end (80b) whereof is connected to the pivoting support (60) and so configured that the translation motion of the sliding platform (40) causes rotation of the pivoting support (60).

2. The attachment base (100) according to Claim 1, further including means (33, 43) of blocking said sliding platform (40) in translation with respect to the main frame (10,20,30) when it is in its first position, and de-blocking means (34) that enable the freeing of the translation motion of said platform (40).

3. The attachment base (100) according to Claim 2, wherein the sliding platform (40) includes at least one lateral platform surface extending in the longitudinal direction (X) and the main frame (10, 20, 30) includes at least one lateral frame surface extending in the longitudinal I reaction (X) and opposite said lateral or platform surface, and wherein the sliding platform (40) or the frame (10, 20, 30) bears at least one dowel (43) projecting outward from its lateral surface, said dowel (43) being able to move, from an extended position wherein it cooperates with a hole (33) made in the opposite lateral surface in order to prevent any movement of said platform (40) with respect to the main frame (10, 20, 30), to a retracted position wherein the platform (40) is free to translate with respect to the main frame (10, 20, 30).

4. The attachment base (100) according to Claim 3, wherein said dowel (43) is naturally constrained in its extended position under the influence of a return force and said dowel (43) can be brought back into its retracted position by operating an actuation system (34, 341, 342, 45, 441, 442, 47a, 47b).

5. The attachment base (100) according to any one of the foregoing claims, wherein the main frame (10, 20, 30) includes a frame base (20), a frame extension (30) able to translate in the longitudinal direction (X) with respect to said frame base (20), as well as means (22, 32) of blocking said frame extension (30) in translation with respect to said frame base (20).

6. The attachment base (100) according to Claim 5, wherein the frame base (20) is equipped with at least one latch (22) capable of entering between detents (32) provided on the frame extension (30), so as to block all relative motion between the frame base (20) and the frame extension (30).

7. The attachment base (100) according to any one of the foregoing claims, wherein the first end (80a) of the connecting rod (80) is mounted on the main frame (10, 20, 30) so as to pivot about a pivoting axis (35) perpendicular to the sliding plane (P1) and aligned with the axis of rotation (A-A) of the pivoting support (60) in the longitudinal direction (X), said pivoting axis (35) being defined in a diametral plane (P2) perpendicular to the sliding plane (P1), and wherein the second end (80b) of the connecting rod (80) is attached to the pivoting support (60) in such a way that, given the maximum rotation angle of the pivoting support when the platform is sliding (40), this second end (80b) always remains on one and the same side of said diametral plane (P2).

8. The attachment base (100) according to Claim 7, wherein the connecting rod (80) can be attached to the pivoting support (60) at at least two different locations (Q1, Q2) set on either side of said diametral plane (P2), such that the direction of rotation of the pivoting support (60) during translation of the platform (40) can be selected at will.

9. The attachment base (100) according to any one of the foregoing claims, wherein the connecting rod (80) and the pivoting support (60) are connected by means of a pin (83) extending into the thickness of said pivoting support (60) and held in position under the influence of a radial pressure force.

10. The attachment base (100) according to Claim 9, wherein the main frame (10, 20, 30) includes an opening and the pivoting support (60) includes in its center a through hole located facing said opening, and wherein said radial pressure force is exerted by means of a rod (90) which can be inserted through said through hole and one end whereof (91) is able to enter into a lateral peripheral groove (85) of said pin (83) and to bear on said pin (83).

11. The attachment base (100) according to Claim 10, wherein a return spring (92) mounted within said rod (90) exerts a force on at least one finger (91) extending from one end of said rod (90) and capable of bearing against said pin (83), said spring being connected to an actuating device (94, 96) capable of being manually operated so as to compress said return spring (92) and retract said finger (91) toward the inside of the rod (90).

12. The attachment base (100) according to any one of the foregoing claims, wherein the attachment means include an attachment support (70) equipped with an operating handle (73), said attachment base (100) additionally including a protection plate (50) with a longitudinally (X) extended shape, located under the attachment support (70) and not corotating with it, designed to prevent access from below to said operating handle (73) when the platform (40) is in its first position.

13. Assembly including an attachment base (100) according to any one of the foregoing claims and a car seat for a child capable of being attached onto said attachment base (100).

## Patentansprüche

1. Befestigungsbasis (100) für einen Autokindersitz, die umfaßt:
- ein Hauptgehäuse (10, 20, 30), das mit Verschiebeführungsmittein (31) ausgestattet ist,
- eine Schiebeplattform (40), die geeignet ist, sich gegenüber dem Hauptgehäuse (10, 20, 30) in einer Schiebeebene (P1) entlang einer Längsrichtung (X), zwischen einer ersten Position und einer zweiten Position, durch Zusammenwirken mit den Verschiebeführungsmittein (31) zu verschieben,
- einen schwenkbaren Träger (60), der an der Schiebeplattform (40) um eine Achse (A-A), die zu der Schiebeebene (P1) der Plattform (40) orthogonal verläuft, drehfrei angebracht ist,
- Mittel zum Befestigen (70, 72) des Autokindersitzes, die mit dem schwenkbaren Träger (60) drehfest verbunden sind,
und **dadurch gekennzeichnet ist, daß** sie umfaßt:
- eine Stange (80), von welcher ein erstes Ende (80a) mit dem Hauptgehäuse (10, 20, 30) verbunden ist, und ein zweites Ende (80b) mit dem schwenkbaren Träger (60) verbunden ist, und die derart gestaltet ist, daß die Verschiebebewegung der Schiebeplattform (40) zur Drehung des schwenkbaren Trägers (60) führt.

2. Befestigungsbasis (100) nach Anspruch 1, ferner umfassend Mittel zum Festlegen gegen ein Verschieben (33, 43) der Schiebeplattform (40) gegenüber dem Hauptgehäuse (10, 20, 30), wenn sich diese in ihrer ersten Position befindet, sowie Lösemittel (34), die ermöglichen, die Verschiebebewegung der Plattform (40) freizugeben.

3. Befestigungsbasis (100) nach Anspruch 2, wobei die Schiebeplattform (40) wenigstens eine Plattformseitenfläche umfaßt, die in der Längsrichtung (X) verläuft, und das Hauptgehäuse (10, 20, 30) wenigstens eine Gehäuseseitenfläche umfaßt, die in der Längsrichtung (X) verläuft und der Plattformseitenfläche gegenüberliegt, und wobei die Schiebeplattform (40) oder das Gehäuse (10, 20, 30) wenigstens einen Zapfen (43) trägt, der gegenüber ihrer/seiner Seitenfläche vorspringt, wobei der Zapfen (43) von einer ausgefahrenen Position, in der er mit einer in der gegenüberliegenden Seitenfläche ausgebildeten Öffnung (33) zusammenwirkt, um jedwede Bewegung der Plattform (40) gegenüber dem Hauptgehäuse (10, 20, 30) zu verhindern, in eine eingezogene Position gelangen kann, in der die Plattform (40) sich gegenüber dem Hauptgehäuse (10, 20, 30) frei verschieben kann.

4. Befestigungsbasis (100) nach Anspruch 3, wobei der Zapfen (43) unter der Wirkung einer Rückstellkraft in seine ausgefahrene Position natürlich belastet ist, und der Zapfen (43) durch Betätigen eines Betätigungssystems (34, 341, 342, 45, 441, 442, 47a, 47b) in seine eingezogene Position zurückgeführt werden kann.

5. Befestigungsbasis (100) nach einem der vorhergehenden Ansprüche, wobei das Hauptgehäuse (10, 20, 30) eine Gehäusebasis (20), eine Gehäuseerweiterung (30), die geeignet ist, sich in der Längsrichtung (X) gegenüber der Gehäusebasis (20) zu verschieben, sowie Mittel zum Festlegen gegen ein Verschieben (22, 32) der Gehäuseerweiterung (30) gegenüber der Gehäusebasis (20) umfaßt.

6. Befestigungsbasis (100) nach Anspruch 5, wobei die Gehäusebasis (20) mit wenigstens einem Riegel (22) ausgestattet ist, der geeignet ist, zwischen Rasten (32), die an der Gehäuseerweiterung (30) vorgesehen sind, einzugreifen, um jedwede Relativbewegung zwischen der Gehäusebasis (20) und der Gehäuseerweiterung (30) zu blockieren.

7. Befestigungsbasis (100) nach einem der vorhergehenden Ansprüche, wobei das erste Ende (80a) der Stange (80) an dem Hauptgehäuse (10, 20, 30) um eine Schwenkachse (35), die zu der Schiebeebene (P1) senkrecht verläuft und mit der Rotationsachse (A-A) des schwenkbaren Trägers (60) in der Längsrichtung (X) ausgerichtet ist, schwenkbar angebracht ist, wobei die Schwenkachse (35) in einer zu der Schiebeebene (P1) senkrechten Diametralebene (P2) definiert ist, und wobei das zweite Ende (80b) der Stange (80) an dem schwenkbaren Träger (60) derart befestigt ist, daß - unter Berücksichtigung des maximalen Drehwinkels des schwenkbaren Trägers bei Verschieben der Plattform (40) - dieses zweite Ende (80b) stets auf einer gleichen Seite der Diametralebene (P2) bleibt.

8. Befestigungsbasis (100) nach Anspruch 7, wobei die Stange (80) wenigstens an zwei unterschiedlichen Stellen (Q1, Q2), die auf beiden Seiten der Diametralebene (P2) angeordnet sind, an dem schwenkbaren Träger (60) befestigt werden kann, so daß die Drehrichtung des schwenkbaren Trägers (60) bei Verschieben der Plattform (40) frei gewählt werden kann.

9. Befestigungsbasis (109) nach einem der vorhergehenden Ansprüche, wobei die Stange (80) und der schwenkbare Träger (60) mittels eines größeren Stifts (83) verbunden sind, der in der Dicke des schwenkbaren Trägers (60) verläuft und unter der Wirkung einer radialen Druckkraft in Position gehalten wird.

10. Befestigungsbasis (100) nach Anspruch 9, wobei das Hauptgehäuse (10, 20, 30) eine Öffnung umfaßt und der schwenkbare Träger (60) in seiner Mitte ein der Öffnung gegenüberliegendes Durchgangsloch umfaßt, und wobei die radiale Druckkraft über einen Stift (90) ausgeübt wird, der über das Durchgangsloch eingeführt werden kann und von dem ein Ende (91) geeignet ist, in eine seitliche Umfangsnut (85) des größeren Stifts (83) einzugreifen und an dem größeren Stift (83) in Anlage zu gelangen.

11. Befestigungsbasis (100) nach Anspruch 10, wobei eine in dem Stift (90) angebrachte Rückstellfeder (92) eine Kraft auf wenigstens einen Finger (91) ausübt, der an einem Ende des Stifts (90) vorspringt und geeignet ist, an dem größeren Stift (83) in Anlage zu gelangen, wobei die Feder mit einer Betätigungsvorrichtung (94, 96) verbunden ist, die manuell betätigt werden kann, um die Rückstellfeder (92) einzufedern und den Finger (91) zum Inneren des Stifts (90) zurückzuziehen.

12. Befestigungsbasis (100) nach einem der vorhergehenden Ansprüche, wobei die Befestigungsmittel einen mit einem Betätigungsgriff (73) ausgestatteten Befestigungsträger (70) umfassen, wobei die Befestigungsbasis (100) ferner eine Schutzplatte (50) mit einer in der Längsrichtung (X) langgestreckten Form umfaßt, welche sich unter dem Befestigungsträger (70) befindet und mit diesem nicht drehfest ist und dazu bestimmt ist, den Zugang von der Unterseite zu dem Betätigungsgriff (73) zu verhindern, wenn sich die Plattform (40) in ihrer ersten Position befindet.

13. Anordnung umfassend eine Befestigungsbasis (100) nach einem der vorhergehenden Ansprüche und einen Autokindersitz, der geeignet ist, an der Befestigungsbasis (100) befestigt zu werden.
